# FASCICULE DE BREVET EUROPEEN

(11) **EP 3 856 484 B1**
(45) Date de publication et mention de la délivrance du brevet: **31.07.2024**
(21) Numéro de dépôt: 19795267.4
(22) Date de dépôt: 25.09.2019
(51) Int. Cl.: B29C 49/64, B29C 35/16, B29C 49/66

(54) **UNITÉ DE TRANSFERT DE RÉCIPIENTS**
CONTAINERTRANSFEREINHEIT
CONTAINER TRANSFER UNIT

(30) Priorité: 27.09.2018 FR 1858858
(43) Date de publication de la demande: 04.08.2021
(73) Titulaire: SIDEL PARTICIPATIONS, 76930 Octeville-sur-Mer (FR)
(72) Inventeur: BERTELLE, Pascal, 76930 OCTEVILLE-SUR-MER (FR)
(74) Mandataire: Sidel Group
(86) Numéro de dépôt international: PCT/FR2019/052257
(87) Numéro de publication internationale: WO 2020/065214

(56) Documents cités:
- EP-A1- 3 348 377
- EP-A2- 2 000 285
- EP-A2- 2 307 184
- FR-A1- 2 806 067
- FR-A1- 2 871 093
- US-A1- 2011 154 785
- US-A1- 2015 069 669

## Description

Le domaine de l'invention est celui de la conception et de la fabrication de récipients en matière plastique.

Plus précisément, l'invention a trait au transfert de récipients entre deux unités de traitement et plus particulièrement en sortie d'une unité de formage.

Certains transferts sont assurés par des roues de transfert ayant des pinces qui se saisissent des cols des récipients pour les maintenir fermement en position. D'autres transferts sont assurés par glissement des bouteilles le long de rails, ce glissement pouvant engendrer un tangage des récipients durant le transfert comme il sera expliqué ci-après.

Par unité de traitement, on entend à la fois les unités de formage, notamment par soufflage avec ou sans étirage complémentaire, et les unités de remplissage ou d'étiquetage par exemple.

Certains récipients en matières plastiques, par exemple les bouteilles, peuvent être conçus pour être réutilisables, c'est-à-dire être remplis à plusieurs reprises, ce type de bouteille est aussi appelé selon l'expression anglaise bouteille « refill ». C'est notamment le principe de la consigne qui s'applique, dans lequel le consommateur paye une consigne qui lui est restituée au retour du récipient vide. Cette pratique est très courante dans les pays d'Amérique du Sud notamment.

Cela permet ainsi de limiter la quantité de récipients à fabriquer puisque les récipients ne sont pas recyclés après leur utilisation, mais font partie d'un cycle de traitement qui comprend un recyclage uniquement lorsque les récipients sont trop usés pour être réutilisés.

En outre, la consigne permet de responsabiliser les consommateurs qui ne jettent plus les récipients dans la nature, cela afin de récupérer leur consigne.

Toutefois, pour être réutilisables, de tels récipients présentent des caractéristiques particulières.

En effet, pour résister aux utilisations successives, ces récipients comprennent des parois d'épaisseurs supérieurs aux récipients qui sont recyclés directement après leur utilisation, comme c'est notamment le cas en Europe.

Lors de la fabrication de récipients, les récipients sont obtenus à partir de préformes chauffées puis soufflées dans des moules (avec étirage axial le cas échéant) pour obtenir leur forme finale.

En sortie des moules, le fond des récipients présente généralement une température importante (au-dessus de la température de transition vitreuse de leur matériau constitutif) qui peut provoquer leur déformation, notamment en cas de chocs avec d'autres récipients. C'est particulièrement le cas pour les bouteilles consignées qui comportent un fond présentant une épaisseur de matière importante pour résister aux utilisations successives.

Le fond des récipients est la partie du récipient formé qui comprend le plus de matière et qui présente donc une inertie thermique importante. Ainsi, la chaleur du fond des récipients est plus longue à se dissiper que celle du corps des récipients par exemple. Il est précisé que le col (qui comprend le buvant et un filetage pour la solidarisation d'un bouchon) n'est pas soumis à la chauffe et à la déformation lors du formage du récipient.

Il est donc nécessaire de refroidir au moins le fond des récipients pour éviter toute déformation des récipients, une déformation pouvant provoquer un manque de stabilité des récipients, voire une défaillance structurelle du récipient, rendant ce dernier inutilisable. En outre des déformations du fond des récipients, même mécaniquement acceptables, sont susceptibles de placer les récipients hors des tolérances (par exemple esthétiques) du consommateur et/ou du distributeur de boissons.

Par ailleurs, ce refroidissement est d'autant plus nécessaire qu'en sortie de l'unité de formage, les récipients sont au contact les uns des autres.

En effet, lors de leur formage, les récipients sont régulièrement espacés les uns des autres puisque les moules sont montés sur un carrousel tournant. Lorsque les récipients sortent des moules, ils entrent dans une unité de transfert dans laquelle ils circulent en étant au contact les uns des autres. Cette unité de transfert peut notamment servir de zone tampon dans laquelle les récipients sont stockés avant un traitement postérieur, par exemple un remplissage par un liquide ou un étiquetage.

En revanche, lors de leur entrée dans l'unité de transfert, les récipients peuvent être amenés à se balancer, soit selon leur trajectoire de déplacement, soit perpendiculairement à leur trajectoire de déplacement, de telle sorte que le fond d'un récipient entrant dans l'unité de transfert vient buter contre le corps d'un récipient précédent ou contre des éléments de l'unité de transfert, notamment des guides. De telle unité de transfert utilisant notamment des convoyeurs à air, sont décrites dans le document FR 2 806 067 A1.

Pour éviter l'endommagement des fonds dans les unités de transfert, des solutions ont été développées pour refroidir, et donc solidifier le fond des récipients, et/ou guider les récipients lors de leur transfert.

Le document de brevet publié sous le numéro FR 2 871 093 A1, décrit une unité de refroidissement comporte un circuit d'alimentation en gaz sous pression, un circuit d'alimentation en liquide, et une buse d'atomisation générant un jet composé d'un mélange gaz et liquide permettant de refroidir le fond du récipient.

De plus, le document de brevet publié sous le numéro WO 2010/012957, décrit une unité de transfert dans laquelle le refroidissement des fonds des récipients est assuré par une éponge chargée d'un liquide qui vient s'appuyer contre le fond des récipients pour libérer le liquide qu'elle contient. Le liquide libéré vient alors au contact du récipient pour le refroidir. Le contact de l'éponge avec le récipient crée également un guidage des récipients pour éviter leur balancement.

Un tel refroidissement présente certains inconvénients. En effet, la venue en contact de l'éponge avec le récipient crée un effort mécanique contre le récipient. Dès lors, il existe un risque de déformation du récipient dû à cet effort mécanique, la déformation pouvant rendre instable, et donc inutilisable, le récipient.

Par ailleurs, le contact direct entre le liquide et les récipients peut provoquer un choc thermique pour la matière du récipient, ce qui peut nuire à ses performances mécaniques et notamment à sa tenue mécanique.

Il est donc difficile de combiner le guidage et le refroidissement des récipients. Ces deux actions sont d'ailleurs généralement dissociées.

Enfin, les cadences de production sont de plus en plus élevées pour permettre la mise sur le marché de plus de récipients réutilisables en lieu et place des récipients à usage unique.

A titre indicatif pour ce type de bouteilles consignées, la cadence de fabrication est passée d'environ 600 bouteilles fabriquées par heure et par moule, à 800 voire 1000 bouteilles fabriquées par heure et par moule actuellement pour les plus grosses productions. On comprend alors que, pour ne pas pénaliser la production, les cadences de transfert sont augmentées, ce qui réduit d'autant le temps de refroidissement du fond des récipients.

L'invention a notamment pour objectif de palier les inconvénients de l'art antérieur.

Plus précisément, l'invention a pour objectif de proposer une unité de transfert qui permette d'assurer le refroidissement et le guidage des récipients en sortie de l'unité de formage, sans risque pour les récipients.

L'invention a également pour objectif de fournir une telle unité de transfert qui permette de répondre à l'augmentation des cadences de production sans risque pour les récipients fabriqués.

L'invention a en outre pour objectif de fournir une telle unité de transfert qui soit compatible avec des récipients de différentes formes et de différentes dimensions.

Ces objectifs, ainsi que d'autres qui apparaîtront par la suite, sont atteints grâce à l'invention qui a pour objet une unité de transfert de récipient en sortie d'une unité de formage desdits récipients, les récipients présentant un fond destiné à former une surface d'appui du récipient, l'unité de transfert comprenant :
- des moyens supérieurs de guidage des récipients le long d'une trajectoire prédéterminée ;
- des moyens de refroidissement du fond des récipients,
caractérisé en ce que les moyens de refroidissement sont intégrés à un guide inférieur des récipients, le guide inférieur présentant une face supérieure destinée à être disposée sans contact en regard des fonds des récipients, la face supérieure formant une butée en balancement des récipients selon la trajectoire prédéterminée.

Ainsi, lors de leur transfert, les récipients sont à la fois guidés et refroidis, sans risque de déformation. En effet, l'absence de contact entre la face supérieure du guide inférieur et le fond des récipients permet d'éviter un frottement des récipients sur la face supérieure, et donc une déformation de ceux-ci.

Par ailleurs, dans le cas où les récipients entreraient en balancement, leur fond viendrait en contact avec la face supérieure du guide inférieur, bloquant alors le mouvement de balancement.

De préférence, les moyens de refroidissement comprennent une pluralité d'orifices d'injection d'air orientés de manière à refroidir le fond des récipients.

Il est alors possible d'injecter de l'air vers le fond des récipients selon différentes trajectoires. Ainsi on peut soit :
- diriger tous les orifices vers le centre du fond des récipients ;
- diriger chaque orifice selon l'axe d'extension des récipients de sorte à créer une répartition homogène de l'air ;
- diriger chaque orifice vers l'extérieur du fond des récipients de sorte à refroidir principalement la base du fond qui forme une assise du récipient.

Avantageusement, le guide inférieur comprend au moins une plaque présentant la face supérieure.

Une telle plaque permet de faciliter la conception et la réalisation de l'unité de transfert.

Selon un premier mode de réalisation avantageux, la plaque s'étend le long de la trajectoire prédéterminée et intègre une canalisation d'air de refroidissement s'étendant selon la trajectoire prédéterminée, les orifices débouchant sur la surface supérieure de la plaque et communicant avec la canalisation d'air de refroidissement pour permettre l'injection d'un air depuis la canalisation d'air de refroidissement vers le fond des récipients.

Une telle plaque permet une conception et un montage aisés de l'unité de transfert.

Par ailleurs, on s'assure que le flux d'air de refroidissement peut être acheminé et injecté sur le fond des récipients.

En outre, une telle plaque permet une adaptation du guide inférieur à tous les récipients, peu importe leur taille ou leur forme.

Selon un deuxième mode de réalisation avantageux, les moyens de refroidissement comprennent :
- une paire de longerons montés sur une surface supérieure de la plaque, les longerons étant écartés l'un de l'autre pour former avec la plaque une rainure, et portant la face supérieure ;
- au moins une conduite d'air de refroidissement logée dans la rainure, la conduite d'air de refroidissement présentant les orifices pour permettre l'injection d'un air depuis la conduite d'air de refroidissement vers les fonds des récipients.

Il est ainsi possible d'adapter le débit d'air injecté sur le fond des récipients en fonction du type de récipients. Ainsi, dans le cas d'un récipient large, on pourra choisir une conduite d'air de refroidissement d'un grand diamètre, et dans le cas d'un récipient fin, on pourra choisir une conduite de refroidissement d'un petit diamètre.

Dans ce cas, la conduite d'air de refroidissement présente avantageusement un diamètre compris entre 8 mm et 37 mm, étant entendu que le diamètre de la conduite d'air de refroidissement est déterminé en fonction du type de récipient transféré par l'unité de transfert.

Avantageusement, les moyens de refroidissement sont reliés à une unité de formage positionnée en amont de l'unité de transfert selon la trajectoire prédéterminée des récipients, pour récupérer un air de soufflage des récipients comme air de refroidissement du fond des récipients.

Il est ainsi possible de récupérer l'air de soufflage des récipients pour diminuer la consommation énergétique de l'ensemble de fabrication des récipients. Par ailleurs, l'air de soufflage ayant une pression importante, cela évite de compresser un nouvel air pour le refroidissement. Enfin, l'air de refroidissement issu de l'unité de soufflage présente une température idéale pour le refroidissement du fond des récipients.

De préférence, les moyens supérieurs de guidage comprennent au moins un rail, les récipients présentant une collerette destinée à glisser sur le rail.

Ces moyens supérieurs de guidage sont simples de mise en oeuvre et limitent le frottement des récipients au bénéfice de leur facilité de déplacement. Ainsi, on évite que les récipients ne soient ralentis lors de leur transfert, au bénéfice de l'augmentation des cadences de production de récipients.

Selon un mode préféré de réalisation, l'unité de transfert comprend un guide latéral pour limiter le déplacement des récipients perpendiculairement à leur trajectoire prédéterminée.

Le déplacement des récipients est ainsi garanti (ou quasiment) de ne se faire que le long de la trajectoire, de sorte que les récipients ne butent pas les uns contre les autres, ce qui pourrait avoir pour effet de provoquer leur déformation.

Avantageusement, le guide inférieur est monté mobile sur un bâti pour permettre d'adapter la distance entre les moyens de refroidissement et le fond des récipients.

Par un réglage affiné, on s'assure alors du bon transfert des récipients entre l'unité de formage et une unité de remplissage par exemple. En outre, une même unité de transfert peut donc servir pour la fabrication de récipients de différentes tailles, contenances et formes.

De préférence, les moyens de refroidissement sont des moyens de refroidissement des fonds de récipients à une température comprise entre -10°C et 5°C.

Une telle gamme de température permet un refroidissement rapide du fond des récipients, sans risque de déformation ni de choc thermique pour la matière constitutive du récipient.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue schématique d'un ensemble de fabrication de récipients comprenant une unité de formage des récipients, une unité des traitement des récipients formés, et une unité de transfert selon l'invention, des récipients formés vers l'unité de traitement ;
- la figure 2 est une vue schématique de l'unité de transfert selon l'invention ;
- la figure 3 est une vue schématique d'un guide inférieur et de moyens de refroidissement du fond des récipients de l'unité de transfert selon l'invention, selon un premier mode de réalisation ;
- la figure 4 est une vue schématique d'un guide inférieur et de moyens de refroidissement du fond des récipients de l'unité de transfert selon l'invention, selon un deuxième mode de réalisation.

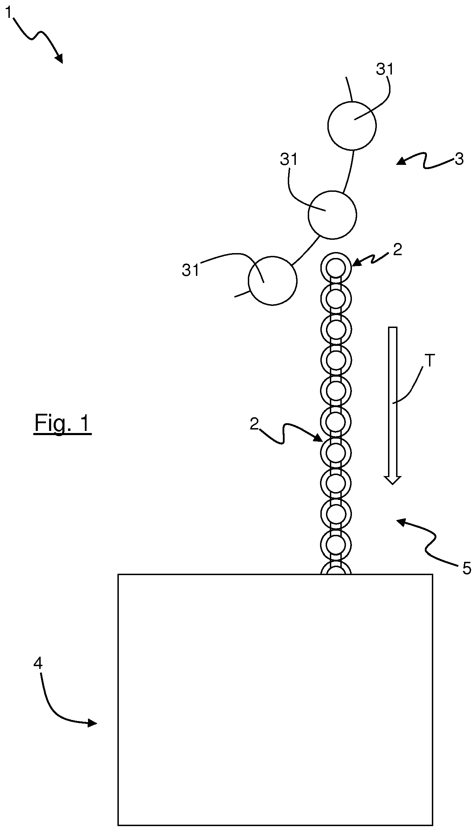

La figure 1 illustre un ensemble de fabrication 1 de récipients 2. L'ensemble de fabrication 1 comprend notamment :
- une unité de formage 3 dans laquelle des ébauches préalablement chauffées sont introduites dans des moules 31 pour former des récipients 2 à l'empreinte des moules 31 ;
- une unité de traitement 4 pour le traitement des récipients 2 formés , par exemple une remplisseuse ou une étiqueteuse,
- une unité de transfert 5 permettant le transfert des récipients 2 formés depuis l'unité de formage 3 jusqu'à l'unité de traitement 4 selon une trajectoire prédéterminée T.

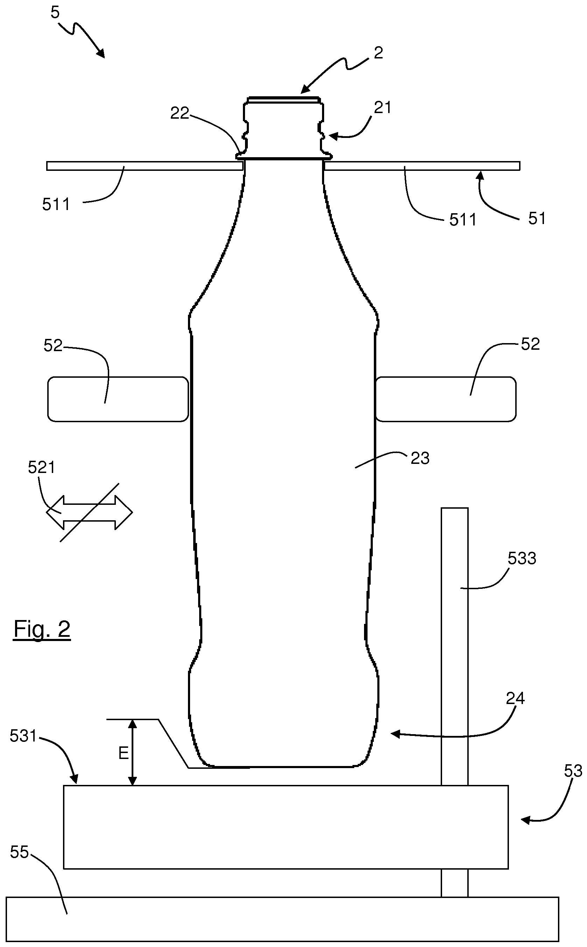

En référence à la figure 2, chaque récipient 2 comprend :
- un col 21 présentant une collerette 22 s'étendant radialement autour du col 21 ;
- un corps 23 s'étendant axialement depuis le col 21,
- un fond 24 fermant le récipient 2 et destiné à former une surface d'appui du récipient 2 sur une surface.

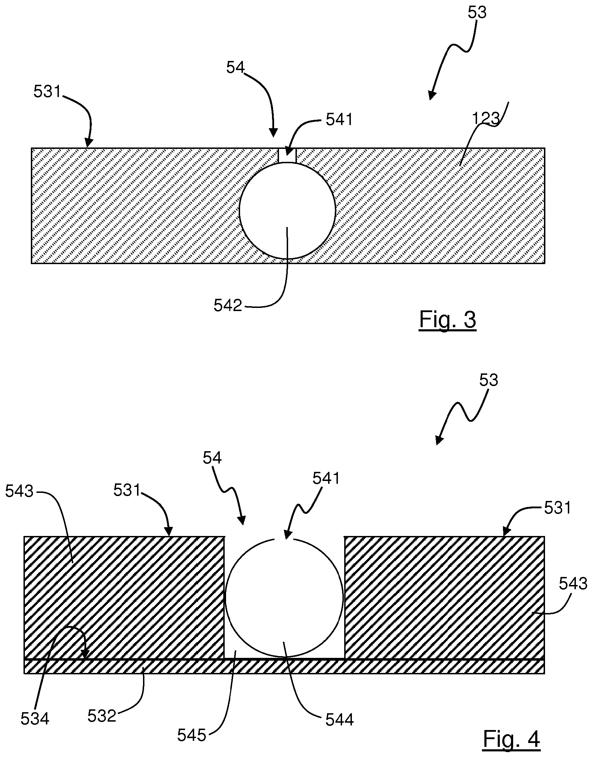

En référence aux figures 2 à 4, une unité de transfert 5 selon l'invention comprend :
- des moyens supérieurs de guidage 51 ;
- au moins un guide latéral 52 ;
- un guide inférieur 53 ;
- des moyens de refroidissement 54 (illustrés sur les figures 3 et 4),
- un bâti 55 duquel sont solidaires les moyens supérieurs de guidage 51, le guide latéral 52, le guide inférieur 53 et les moyens de refroidissement 54.

Les moyens supérieurs de guidage 51 comprennent au moins un rail 511 sur lequel est destiné à glisser la collerette 22 des récipients 2. En l'espèce, les moyens supérieurs de guidage 51 comprennent deux rails 511 espacés l'un de l'autre pour définir entre eux un chemin de passage des récipients 2.

De préférence, l'un au moins des deux rails 511 est monté mobile sur le bâti 55 de sorte à pouvoir adapter le chemin de passage des récipients 2 à des cols 21 de différentes tailles.

Tel qu'illustré sur la figure 2, l'unité de transfert 5 comprend deux guides latéraux 52 positionnés chacun d'un côté de la trajectoire prédéterminée T, c'est-à-dire de part et d'autre des récipients 2 transférés.

Les guides latéraux 52 sont avantageusement montés mobiles sur le bâti 55 (la liaison entre les guides latéraux 52 et le bâti n'étant pas illustrée) de sorte à s'adapter à différentes largeurs ou différents diamètres de récipients 2. Les guides latéraux 52 sont notamment destinés à être disposés en regard du corps 23 des récipients 2 pour empêcher les récipients 2 de se balancer perpendiculairement à la trajectoire prédéterminée T, comme cela est illustré par la flèche barrée 521.

Tel qu'illustré sur les figures 2 à 4, le guide inférieur 53 présente une face supérieure 531 destinée à former une butée en balancement des récipients 2 selon la trajectoire prédéterminée T.

De préférence, le guide inférieur 53 comprend une plaque 532 s'étendant selon la trajectoire prédéterminée T. La plaque 532 est montée mobile sur le bâti 55, par exemple au moyen d'une colonne de levage 533 solidaire du bâti 55. Cela permet notamment de pouvoir ajuster la distance entre le fond 24 des récipients 2 et la face supérieure 531 du guide inférieur 53 pour créer entre eux un espace E. L'espace E entre le fond 24 des récipients 2 et la face supérieure 531 du guide inférieur 53 est de préférence compris entre 1 mm et 2 mm.

Comme expliqué ci-après, les moyens de refroidissement 54 comprennent une pluralité d'orifices 541 d'injection d'air orientés de manière à refroidir le fond 24 des récipients 2

Selon un premier mode de réalisation illustré sur la figure 3, les moyens de refroidissement 54 des récipients 2 sont intégrés au guide inférieur 53. Plus précisément, les moyens de refroidissement 54 sont intégrés à la plaque 532 du guide inférieur 53. La plaque 532 porte ainsi la face supérieure 531 du guide inférieur 53. En d'autres termes, la face supérieure 531 est formée par une surface supérieure de la plaque 532.

Plus précisément, les moyens de refroidissement 54 sont formés par une canalisation d'air de refroidissement 542 pratiquée dans une épaisseur de la plaque 532, la canalisation d'air de refroidissement 542 s'étendant selon la trajectoire prédéterminée T.

Les orifices 541 sont alors pratiqués dans la plaque 532 de sorte à communiquer avec la canalisation d'air de refroidissement 542 et à déboucher sur la face supérieure 531 du guide inférieur 53. Ainsi, un air de refroidissement circulant dans la canalisation d'air de refroidissement 541 peut être injecté vers le fond 24 des récipients 2.

Selon un deuxième mode de réalisation illustré sur la figure 4, les moyens de refroidissement 54 sont intégrés au guide inférieur 53 et comprennent :
- au moins un longeron 543 monté sur la face supérieure 534 de la plaque 532,
- au moins un conduite d'air de refroidissement 544 montée sur la face supérieure 534 de la plaque 532.

Plus précisément, les moyens de refroidissement 54 comprennent une paire de longerons 543 écartés l'un de l'autre pour former avec la plaque 532 une rainure 545.

Dans ce deuxième mode de réalisation, la face supérieure 531 est alors portée par les longerons 543.

La conduite d'air de refroidissement 544 est montée dans la rainure 545 et présente les orifices 541 pour permettre qu'un air de refroidissement circulant dans la conduite d'air de refroidissement 544 puisse être injecté vers le fond 24 des récipients 2.

De préférence, la conduite d'air de refroidissement 544 présente un diamètre compris entre 8 mm et 37 mm, et plus préférentiellement, entre 25 mm et 29 mm.

Selon une variante de réalisation non illustrée, la rainure 545 peut être pratiquée directement par fraisage dans l'épaisseur de la plaque 532. L'utilisation de longerons 543 permet d'ajuster encore plus finement l'espace E entre le fond 24 des récipients 2 et la face supérieure 531. En effet, il suffit simplement de changer les longerons 543 pour ajuster l'espace E, en l'augmentant ou en le diminuant.

Indépendamment du mode de réalisation choisi, les moyens de refroidissement 54 sont reliés fluidiquement à l'unité de formage 3 pour récupérer l'air de soufflage des récipients 2.

Lors du soufflage des récipients 2, de l'air est injecté dans des préformes préalablement chauffées situées dans les moules 31. Une fois les récipients 2 formés dans les moules 31, l'air injecté est extrait des récipients 2 (il s'agit d'une phase de dégazage) afin que l'intérieur des récipients 2 soit à la pression atmosphérique.

L'air extrait lors de la phase de dégazage, qui présente une pression généralement comprise entre 20 bars et 45 bars, est généralement divisé en une première partie qui est réutilisée pour le soufflage d'un autre récipient 2, et une deuxième partie qui est rejetée dans l'atmosphère.

Cette deuxième partie d'air peut alors être utilisée pour le refroidissement du fond 24 de récipients 2 dans l'unité de transfert 5.

L'air extrait de l'unité de formage 3 est alors acheminé vers la conduite d'air de refroidissement 544 ou vers la canalisation d'air de refroidissement 542 pour être injecté vers le fond 24 des récipients 2.

Dans le cas où l'air extrait de l'unité de formage 3 est trop chaud, des moyens de refroidissement d'air *ad hoc* peuvent être prévus entre l'unité de formage 3 et l'unité de transfert 5.

Les moyens de refroidissement 54 sont ainsi des moyens de refroidissement du fond 24 des récipients 2 à une température comprise entre -1 0°C et 5°C.

De préférence, les moyens de refroidissement 54 permettent un refroidissement du fond 24 des récipients 2 à une température comprise entre -6°C et 0°C.

Selon une variante de réalisation non illustrée sur les figures, les guides latéraux 52 et les longerons 543 pourraient être une unique pièce de sorte que les récipients 2 soient guidés latéralement par leur fond 24.

En fonctionnement, les récipients 2 sont suspendus par leur collerette 22 sur les rails 511 des moyens supérieurs de guidage 51. Les récipients 2 glissent alors sur les rails 511, selon la trajectoire prédéterminée T, pour atteindre l'unité de traitement 4. Lors de leur déplacement, les récipients 2 sont maintenus sensiblement horizontaux grâce aux guides latéraux 52 et au guide inférieur 53. En d'autres termes, les récipients ne basculent pas d'avant en arrière ou de droite à gauche durant leur transfert.

A titre d'exemple, si un basculement d'avant en arrière, c'est-à-dire selon la trajectoire prédéterminée T, est initié, alors le fond 24 des récipients 2 vient en butée contre la face supérieure 531 qui empêche alors le basculement. L'espace E compris entre 1 mm et 2 mm permet de limiter de manière rapide le basculement des récipients 2.

Lors de leur transfert, les récipients 2 sont donc guidés mais également refroidis (sur leur fond 24) grâce aux moyens de refroidissement 54. Ainsi, le guidage et le refroidissement des récipients 2 sont combinés grâce à l'unité de transfert 5 selon l'invention.

## Revendications

1. Unité de transfert (5) de récipient (2) en sortie d'une unité de formage (3) desdits récipients (2), les récipients (2) présentant un fond (24) destiné à former une surface d'appui du récipient (2), l'unité de transfert (5) comprenant :
- des moyens supérieurs de guidage (51) des récipients (2) le long d'une trajectoire prédéterminée (T) ;
- des moyens de refroidissement (54) du fond (24) des récipients (2),
**caractérisé en ce que** les moyens de refroidissement (54) sont intégrés à un guide inférieur (53) des récipients (2), le guide inférieur (53) présentant une face supérieure (531) destinée à être disposée sans contact en regard des fonds (24) des récipients (2), la face supérieure (531) formant une butée en balancement des récipients (2) selon la trajectoire prédéterminée (T).

2. Unité de transfert (5) selon la revendication 1, **caractérisée en ce que** les moyens de refroidissement (54) comprennent une pluralité d'orifices (541) d'injection d'air orientés de manière à refroidir le fond (24) des récipients (2).

3. Unité de transfert (5) selon la revendication 1 ou 2, **caractérisée en ce que** le guide inférieur (53) comprend au moins une plaque (532) présentant la face supérieure (531).

4. Unité de transfert (5) selon la revendication 2 et 3, **caractérisée en ce que** la plaque (532) s'étend le long de la trajectoire prédéterminée (T) et intègre une canalisation d'air de refroidissement (542) s'étendant selon la trajectoire prédéterminée (T), les orifices (541) débouchant sur une surface supérieure (534) de la plaque (532) et communicant avec la canalisation d'air de refroidissement (542) pour permettre l'injection d'un air depuis la canalisation d'air de refroidissement (542) vers le fond (24) des récipients (2).

5. Unité de transfert (5) selon la revendication 3 ou 4, **caractérisée en ce que** les moyens de refroidissement (54) comprennent :
- une paire de longerons (543) montés sur une surface supérieure (534) de la plaque (532), les longerons (543) étant écartés l'un de l'autre pour former avec la plaque (532) une rainure (545), et portant la face supérieure (531) ;
- au moins une conduite d'air de refroidissement (544) logée dans la rainure (545), la conduite d'air de refroidissement (544) présentant les orifices (541) pour permettre l'injection d'un air depuis la conduite d'air de refroidissement (544) vers les fonds (24) des récipients (2).

6. Unité de transfert (5) selon la revendication 5, **caractérisée en ce que** la conduite d'air de refroidissement (544) présente un diamètre compris entre 8 mm et 37 mm.

7. Unité de transfert (5) selon l'une quelconque des revendications précédentes, **caractérisée en ce que** les moyens de refroidissement (54) sont reliés à une unité de formage (3) positionnée en amont de l'unité de transfert (5) selon la trajectoire prédéterminée (T) des récipients (2), pour récupérer un air de soufflage des récipients comme air de refroidissement du fond (24) des récipients (2).

8. Unité de transfert (5) selon l'une quelconque des revendications précédentes, **caractérisée en ce que** les moyens supérieurs de guidage (51) comprennent au moins un rail (511), les récipients (2) présentant une collerette (22) destinée à glisser sur le rail (511).

9. Unité de transfert (5) selon l'une quelconque des revendications précédentes, **caractérisée en ce qu'**elle comprend un guide latéral (52) pour limiter le déplacement des récipients (2) perpendiculairement à leur trajectoire prédéterminée (T).

10. Unité de transfert (5) selon l'une quelconque des revendications précédentes, **caractérisée en ce que** le guide inférieur (53) est monté mobile sur un bâti (55) pour permettre d'adapter la distance entre les moyens de refroidissement (54) et le fond (24) des récipients (2).

11. Unité de transfert (5) selon l'une quelconque des revendications précédentes, **caractérisée en ce que** les moyens de refroidissement (54) sont des moyens de refroidissement des fonds (24) de récipients (2) à une température comprise entre -10°C et 5°C.

## Patentansprüche

1. Einheit (5) zum Transferieren von Behältern (2) am Ausgang einer Einheit (3) zum Formen der Behälter (2), wobei die Behälter (2) einen Boden (24) aufweisen, der dazu bestimmt ist, eine Auflagefläche des Behälters (2) zu bilden, wobei die Transfereinheit (5) Folgendes umfasst:
- obere Mittel (51) zum Führen der Behälter (2) entlang einer vorbestimmten Bahn (T);
- Mittel (54) zum Kühlen des Bodens (24) der Behälter (2),
**dadurch gekennzeichnet, dass** die Kühlmittel (54) in eine untere Führung (53) der Behälter (2) integriert sind, wobei die untere Führung (53) eine obere Seite (531) aufweist, die dazu bestimmt ist, ohne Kontakt gegenüber den Böden (24) der Behälter (2) angeordnet zu sein, wobei die obere Seite (531) einen Anschlag beim Schwingen der Behälter (2) entlang der vorbestimmten Bahn (T) bildet.

2. Transfereinheit (5) nach Anspruch 1, **dadurch gekennzeichnet, dass** die Kühlmittel (54) eine Vielzahl von Lufteinblasöffnungen (541) umfassen, die so ausgerichtet sind, dass sie den Boden (24) der Behälter (2) kühlen.

3. Transfereinheit (5) nach Anspruch 1 oder 2, **dadurch gekennzeichnet, dass** die untere Führung (53) mindestens eine Platte (532) umfasst, die die obere Seite (531) aufweist.

4. Transfereinheit (5) nach Anspruch 2 und 3, **dadurch gekennzeichnet, dass** sich die Platte (532) entlang der vorbestimmten Bahn (T) erstreckt und einen Kühlluftkanal (542) beinhaltet, der sich entlang der vorbestimmten Bahn (T) erstreckt, wobei die Öffnungen (541) an einer oberen Fläche (534) der Platte (532) münden und mit dem Kühlluftkanal (542) in Verbindung stehen, um das Einblasen von Luft aus dem Kühlluftkanal (542) in Richtung des Bodens (24) der Behälter (2) zu ermöglichen.

5. Transfereinheit (5) nach Anspruch 3 oder 4, **dadurch gekennzeichnet, dass** die Kühlmittel (54) Folgendes umfassen:
- ein Paar Längsträger (543), die an einer oberen Fläche (534) der Platte (532) montiert sind, wobei die Längsträger (543) voneinander beabstandet sind, um mit der Platte (532) eine Nut (545) zu bilden, und die obere Seite (531) tragen;
- mindestens eine Kühlluftleitung (544), die in der Nut (545) angeordnet ist, wobei die Kühlluftleitung (544) Öffnungen (541) aufweist, um das Einblasen von Luft aus der Kühlluftleitung (544) in Richtung der Böden (24) der Behälter (2) zu ermöglichen.

6. Transfereinheit (5) nach Anspruch 5, **dadurch gekennzeichnet, dass** die Kühlluftleitung (544) einen Durchmesser zwischen 8 mm und 37 mm aufweist.

7. Transfereinheit (5) nach einem der vorangehenden Ansprüche, **dadurch gekennzeichnet, dass** die Kühlmittel (54) mit einer Formeinheit (3) verbunden sind, die entlang der vorbestimmten Bahn (T) der Behälter (2) stromaufwärts der Transfereinheit (5) positioniert ist, um Behälterblasluft als Luft zum Kühlen des Bodens (24) der Behälter (2) zurückzugewinnen.

8. Transfereinheit (5) nach einem der vorangehenden Ansprüche, **dadurch gekennzeichnet, dass** die oberen Führungsmittel (51) mindestens eine Schiene (511) umfassen, wobei die Behälter (2) einen Kragen (22) aufweisen, der dazu bestimmt ist, auf der Schiene (511) zu gleiten.

9. Transfereinheit (5) nach einem der vorangehenden Ansprüche, **dadurch gekennzeichnet, dass** sie eine Seitenführung (52) umfasst, um die Bewegung der Behälter (2) senkrecht zu ihrer vorbestimmten Bahn (T) zu begrenzen.

10. Transfereinheit (5) nach einem der vorangehenden Ansprüche, **dadurch gekennzeichnet, dass** die untere Führung (53) beweglich an einem Gestell (55) montiert ist, um eine Anpassung des Abstands zwischen den Kühlmitteln (54) und dem Boden (24) der Behälter (2) zu ermöglichen.

11. Transfereinheit (5) nach einem der vorangehenden Ansprüche, **dadurch gekennzeichnet, dass** es sich bei den Kühlmitteln (54) um Mittel zum Kühlen der Böden (24) von Behältern (2) auf eine Temperatur zwischen -10 °C und 5 °C handelt.

## Claims

1. Transfer unit (5) for containers (2) as they leave a forming unit (3) used for forming said containers (2), the containers (2) having a bottom (24) intended to form a supporting surface of the container (2), the transfer unit (5) comprising:
- upper guide means (51) for guiding the containers (2) along a predetermined path (T);
- cooling means (54) for cooling the bottom (24) of the containers (2),
**characterized in that** the cooling means (54) are integrated into a lower guide (53) for the containers (2), the lower guide (53) having an upper face (531) intended to be positioned, without contact, facing the bottoms (24) of the containers (2), the upper face (531) forming an end stop against toppling of the containers (2) along the predetermined path (T).

2. Transfer unit (5) according to Claim 1, **characterized in that** the cooling means (54) comprise a plurality of air injection orifices (541) oriented in such a way as to cool the bottom (24) of the containers (2) .

3. Transfer unit (5) according to Claim 1 or 2, **characterized in that** the lower guide (53) comprises at least a plate (532) exhibiting the upper face (531).

4. Transfer unit (5) according to Claim 2 and 3, **characterized in that** the plate (532) extends along the predetermined path (T) and incorporates a cooling-air line (542) extending along the predetermined path (T), the orifices (541) opening onto an upper surface (534) of the plate (532) and communicating with the cooling-air line (542) to allow air to be injected from the cooling-air line (542) towards the bottom (24) of the containers (2).

5. Transfer unit (5) according to Claim 3 or 4, **characterized in that** the cooling means (54) comprise:
- a pair of longitudinal members (543) mounted on an upper surface (534) of the plate (532), the longitudinal members (543) being separated from one another such that, with the plate (532), they form a slot (545), and bearing the upper face (531);
- at least one cooling-air duct (544) housed in the slot (545), the cooling-air duct (544) exhibiting the orifices (541) to allow air to be injected from the cooling-air duct (544) towards the bottoms (24) of the containers (2).

6. Transfer unit (5) according to Claim 5, **characterized in that** the cooling-air duct (544) has a diameter of between 8 mm and 37 mm.

7. Transfer unit (5) according to any one of the preceding claims, **characterized in that** the cooling means (54) are connected to a forming unit (3) positioned upstream of the transfer unit (5) along the predetermined path (T) of the containers (2) in order to recover container blow-molding air for use as cooling air for cooling the bottom (24) of the containers (2).

8. Transfer unit (5) according to any one of the preceding claims, **characterized in that** the upper guide means (51) comprise at least one rail (511), the containers (2) having a transfer bead (22) intended to slide along the rail (511).

9. Transfer unit (5) according to any one of the preceding claims, **characterized in that** it comprises a lateral guide (52) for limiting the movement of the containers (2) perpendicular to their predetermined path (T) .

10. Transfer unit (5) according to any one of the preceding claims, **characterized in that** the lower guide (53) is mounted movably on a supporting structure (55) such as to allow adjustment of the distance between the cooling means (54) and the bottom (24) of the containers (2) .

11. Transfer unit (5) according to any one of the preceding claims, **characterized in that** the cooling means (54) are means for cooling the bottoms (24) of containers (2) to a temperature of between -10°C and 5°C.
